## Europäisches Patentamt
## European Patent Office
## Office européen des brevets

(19)

(11) Veröffentlichungsnummer: **0 163 215**
**B1**

(12) # EUROPÄISCHE PATENTSCHRIFT

(45) Veröffentlichungstag der Patentschrift:
**07.12.88**

(21) Anmeldenummer: **85106083.0**

(22) Anmeldetag: **17.05.85**

(51) Int. Cl.⁴: $B\ 60\ T\ 8/32$, $B\ 60\ T\ 8/84$

(54) **Antiblockierregelsystem.**

(30) Priorität: **26.05.84 DE 3419714**

(43) Veröffentlichungstag der Anmeldung:
**04.12.85 Patentblatt 85/49**

(45) Bekanntmachung des Hinweises auf die Patenterteilung:
**07.12.88 Patentblatt 88/49**

(84) Benannte Vertragsstaaten:
**DE FR GB IT SE**

(56) Entgegenhaltungen:
**EP-A- 0 106 112**
**DE-A- 2 424 217**
**DE-A- 2 433 092**

(73) Patentinhaber: **ROBERT BOSCH GMBH, Postfach 50, D-7000 Stuttgart 1 (DE)**

(72) Erfinder: **Leiber, Heinz, Ing.-grad., Theodor-Heuss-Strasse 34, D-7141 Oberriexingen (DE)**

(74) Vertreter: **Kammer, Arno, Dipl.-Ing., ROBERT BOSCH GmbH Zentralabteilung Patente Postfach 50, D-7000 Stuttgart 1 (DE)**

ACTORUM AG

**Beschreibung**

Die Erfindung betrifft ein Antiblockierregelsystem mit den Merkmalen des Oberbegriffs des Anspruchs 1.

Ein Antiblockierregelsystem mit diesen Merkmalen ist z.B. aus der Fig. 1 der DE-A-2433092 bekannt. Dort moduliert eine Ventileinrichtung bei Blockierneigung den Druck für ein Hinterrad und ein diagonal dazu liegendes Vorderrad (1. Bremskreis) und für den Bremskreis, von dem die Bremsen der andern Räder betätigt werden, ist eine Folgesteuerung vorgesehen derart, daß der an den zugehörigen Bremsen eingesteuerte Druck etwas kleiner als der durch die Ventileinrichtung im 1. Bremskreis eingesteuerte Druck ist. Außerdem wird dort vorausgesetzt, daß abwechselnd Select-low- und Selecthigh-Betrieb in bezug auf die beiden verwendeten Sensoren wirksam gemacht wird.

Bekanntlich erfordern ABR-Systeme, welche den Forderungen nach Lenkbarkeit, Fahrstabilität und kurzen Bremswegen gerecht werden, einen hohen Aufwand. Es sind Entwicklungsaktivitäten eingeleitet worden, um kostengünstige ABR-Systeme einzusetzen mit reduzierter Leistung. Ein mögliches System ist oben beschrieben. Es sind auch Systeme bekannt geworden, welche bei Bremssystemen mit diagonaler Aufteilung Anwendung finden und je einen Regelkanal für jedes Vorderrad besitzen. Der geregelte Bremsdruck des Vorderrades wird hier über lastabhängige Regler dem gegenüberliegenden Hinterrad zugeführt. Diese Systeme haben den Nachteil, daß die Bremswirkung der Hinterachse nicht voll genutzt wird, insbesondere wenn an dem Vorderrad das Motorschleppmoment wirkt. Besonders kritisch wird das Bremsverhalten, wenn durch eine unerwartete, aber mögliche Verschiebung der Bremskraftbeiwerte in den Bremsen der Vorderachse und der Hinterachse die optimierte Zuordnung geändert wird. Auch das eingangs beschriebene bekannte System bringt diesbezüglich Nachteile mit sich.

Durch die erfindungsgemäße Anwendung von nur einer Magnetventileinrichtung pro Achse in der Kombination mit einer Steuerung des jeweils gegenüberliegenden Rades gemäß dem kennzeichnenden Teil des Anspruchs 1 wird der Aufwand für das ABR-System erheblich reduziert, ohne daß die genannten Nachteile auftreten. Darüber hinaus bietet die ebenfalls vorgeschlagene Sensierung der Radgeschwindigkeit am Vorderachsdifferential eine erhebliche Kostenreduzierung, da bekanntlich die Leitungsführung an dem beweglichen und sehr stark vibrationsbehafteten Achsträger aufwendig ist. Bei entsprechender Auswerteelektronik kann sogar das Tellerrad als Impulsrad mit verwendet werden.

Der Bremskreis mit den folgegesteuerten Radbremsen hat insbesondere bei der Verwendung eines elektromagnetgesteuerten Bypass-Ventils eine nennenswerte Reduzierung des Aufwands für die Sicherheitsschaltung zur Folge. Dieses System sichert volle Fahrstabilität, gute Lenkbarkeit und Bremswege, welche in vielen Fällen sogar geringfügig besser sind als mit blockierten Rädern.

Weiterbildungen und weitere Vorteile ergeben sich aus der folgenden Figuren-Beschreibung. Es zeigen:

Fig. 1 ein erstes Ausführungsbeispiel eines erfindungsgemäßen Antiblockierregelsystems

Fig. 2 ein zweites Ausführungsbeispiel und

Fig. 3 ein drittes Ausführungsbeispiel.

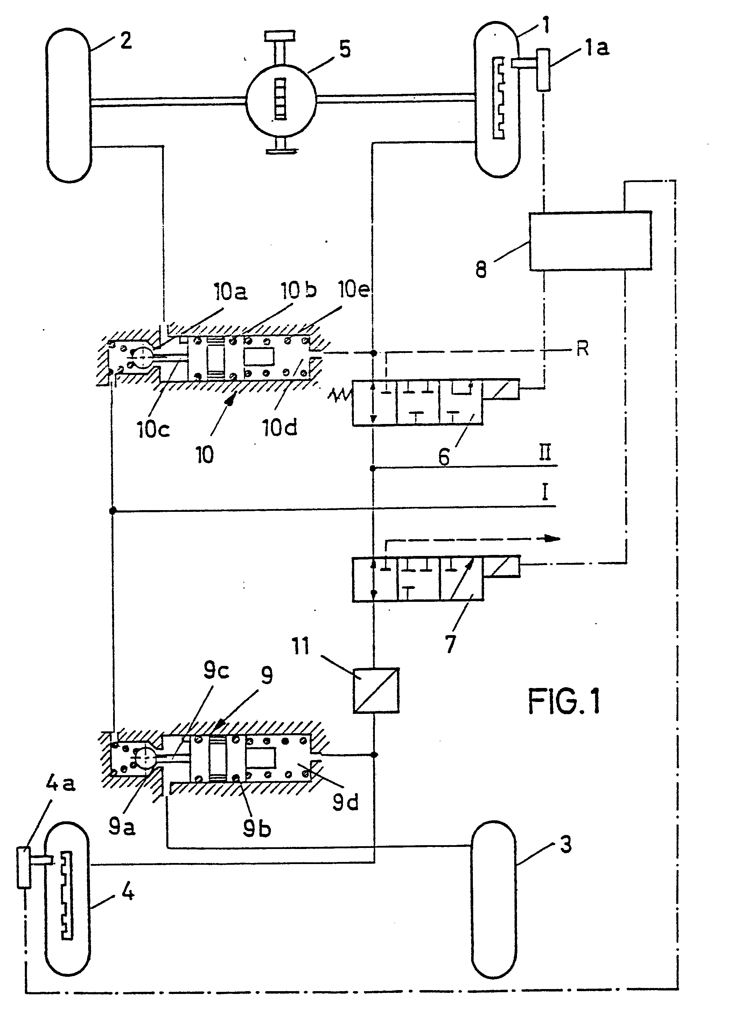

Im Ausführungsbeispiel der Fig. 1 sind die über ein Differential 5 angetriebenen Vorderräder mit 1 und 2, die Hinterräder mit 3 und 4 bezeichnet. Die Bremsen der diagonal zueinander liegenden Räder 1 und 4 sind einem Bremskreis II angeschlossen, der z.B. ein offener Bremskreis sein kann. In die Bremsleitungen zu diesen Rädern 1 und 4 sind hier als Dreistellungsmagnetventile 6 und 7 ausgebildete Ventileinrichtungen eingeschaltet, die von einer Auswerteschaltung 8 bei Blockierneigung ansteuerbar sind und zuerst einmal den Bremsdruck an den Bremsen der Räder 1 und 4 entsprechend dem Radbewegungsverhalten an diesen Rädern 1 und 4 beeinflussen. Hierzu sind diese Räder 1 und 4 mit Drehzahlgebern 1a und 4a versehen, und die Signale dieser Drehzahlgeber werden der Auswerteschaltung 8 zur Erzeugung der Bremsdrucksteuersignale zugeführt. Die Dreistellungsventile 6 und 7 können in den verschiedenen Stellungen entweder Druckaufbau, Druckabbau zur Rückführleitung R oder Druckkonstanthaltung bewirken.

Die Bremsen der diagonal gegenüberliegenden Räder 2 und 3 sind an einen z.B. geschlossenen Bremskreis I angeschlossen. In die Bremsleitungen sind Bremsdrucksteuereinrichtungen 9 und 10 eingeschaltet, die normalerweise die Druckänderungen im Bremskreis I an die Bremsen der Räder 2 bzw. 3 weiterleiten.

Die Bremsdrucksteuereinrichtung 9 besteht aus einem Ventil 9a und einem Modulatorkolben 9b, der über einem Stößel normalerweise das Ventil 9a offen hält. Wird der durch das Dreistellungsventil bei Blockierneigung geregelte und in einem Druckminderer 11 erniedrigte Druck in der Steuerkammer 9d kleiner als der Druck an der Bremse des Rads 3, so wandert der Modulatorkolben 9b nach rechts; damit wird das Ventil 9a geschlossen und der Druck zwischen dem Ventil 9a und der Radbremse des Rads 3 durch Auswandern des Kolbens 9b weiter nach rechts erniedrigt. Die auf den Kolben 9b wirkende Feder ist so dimensioniert, daß sich in der Folge jeweils an der Bremse des Rads 3 etwa der gleiche Druck wie an der Bremse des Rads 4 einstellt. Durch die Möglichkeit der Volumenvergrößerung auf der linken Seite des Kolbens 9b wird es möglich, daß sich der Druck an der Bremse des Rads 3 bei einem μ-Sprung nach kleineren Werten hin anpaßt. Durch einen Stufenkolben kann der Druck im Rad 3 kleiner gewählt werden, was vorteilhaft ist, da dieses Rad nicht sensiert wird.

Die Bremsdrucksteuereinrichtung 10 für die Bremse des Rads 2 sieht zwar genau so aus wie die (9) für das Rad 2, jedoch ist sie durch entsprechende Bemessung der Feder 10e als Differenzdruckbegrenzungsventil wirksam, welches im Regelungsfall den Druck am Rad 2 auf einen vorgegebenen Druckabstand von z.B. 60 bar zum Druck am Rad 1 einsteuert. Bei normaler Bremsung sind die Drücke links und rechts vom Kolben 10b gleich. Bei Erniedrigung des Drucks in der Kammer 10d aufgrund einer Regelung wird bei einer Druckdifferenz von z.B. 60 bar das Ventil 10a geschlossen und nun der Druck am Rad 2 so eingestellt, daß er um 60 bar höher als der am Rad 1 ist. Diese wesentliche Bemessung ist notwendig, um z.B. bei einer Rechtskurve bei mittlerem bis hohem Kraftschlußbeiwert an dem nicht sensierten Rad 2 den Druck zu begrenzen und damit eine Blockiergefahr zu vermeiden. In diesem Fall ist ja das kurveninnere Rad bei entsprechender Kurvengeschwindigkeit stark entlastet und kann somit nur einen geringen Anteil zur Seitenkraft liefern.

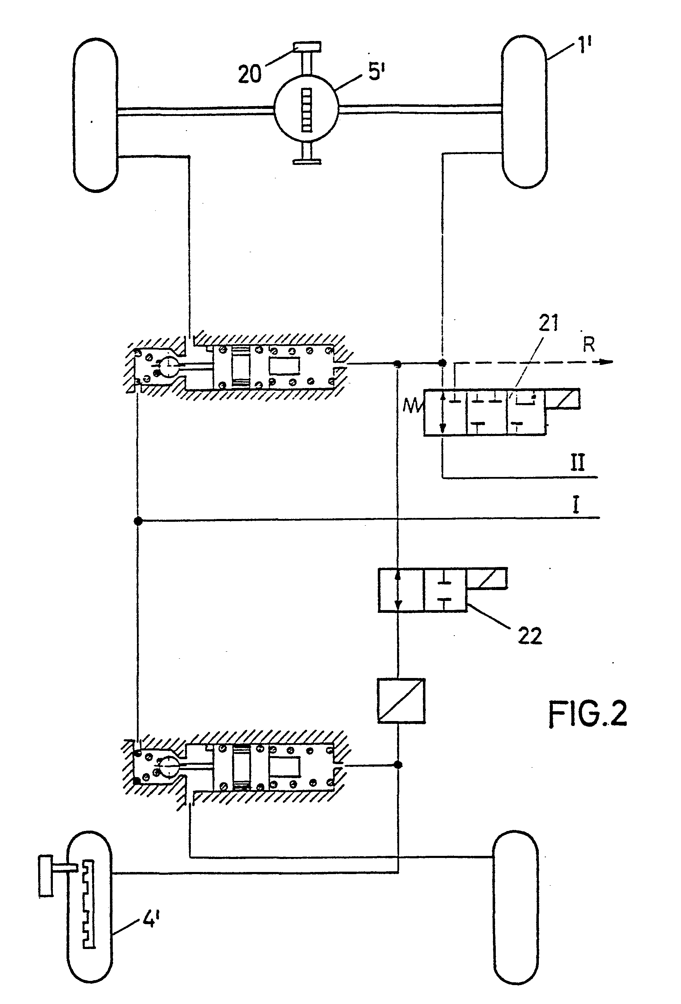

Das Ausführungsbeispiel der Fig. 2 unterscheidet sich in zwei Punkten von dem der Fig. 1. Einmal ist der eine Geschwindigkeitsgeber 20 der Vorderachse nicht mehr am Rad 1', sondern am Differential 5', angeordnet, wodurch die Geschwindigkeiten beider Vorderräder sensiert werden können. Außerdem wird hierdurch der Aufwand reduziert. Bei dieser Sensoranordnung ist eine an sich bekannte (DE-OS 24 33 092) Umschaltung zwischen select high und select low notwendig.

Der andere Unterschied besteht in der vereinfachten Ausbildung der Kombination der Magnetventileinrichtungen. Im Ausführungsbeispiel der Fig. 2 sind anstelle von zwei Dreistellungsventilen 6 und 7 ein Dreistellungsventil 21 für das Rad 1' und ein Zweistellungsventil 22 für das Rad 4' vorgesehen; das Zweistellungsventil 22 ist an den Ausgang des Dreistellungsventils 21 angeschaltet. Hiermit läßt sich am Rad 1' nach wie vor eine beliebige Druckregelung durchführen. Dagegen ist diese für das Rad 4' etwas eingeschränkt, da z.B. bei einem für das Magnetventil 21 anliegenden Druckkonstanthaltungs- oder Druckabbaubefehl ein Druckaufbaubefehl für das Magnetventil 22 nicht sofort ausführbar ist. Dafür ist der Aufwand geringer.

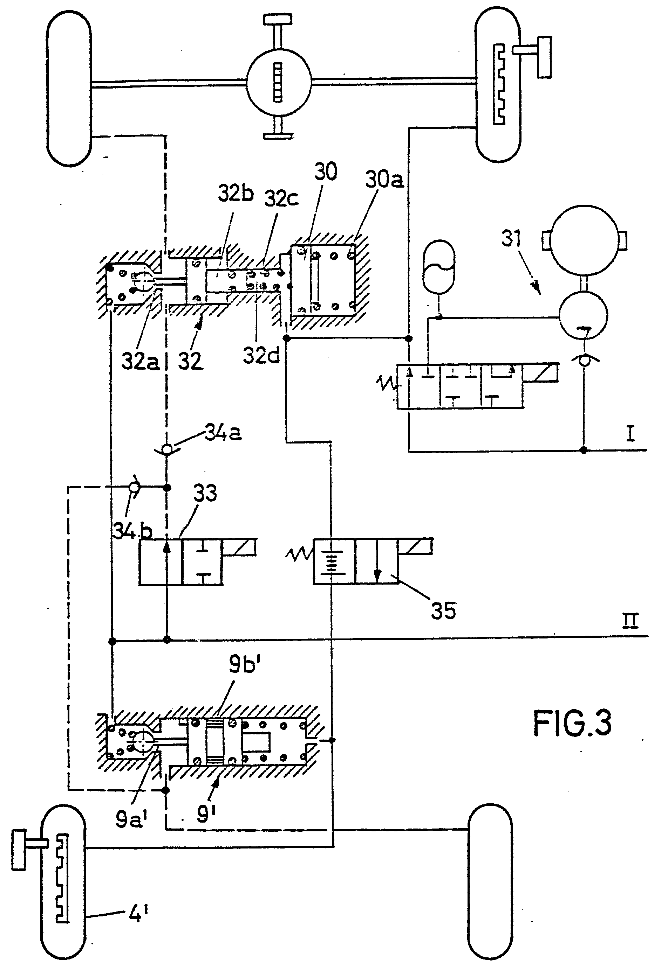

Beim Ausführungsbeispiel der Fig. 3 ist für die Räder der Hinterachse das gleiche Regelungskonzept wie in Fig. 2 vorgesehen. Bei der Vorderachse ist aber nun noch ein vorgespannter Kolben 30 vorgesehen, an dem sich die auf den hier als Stufenkolben 32 ausgebildeten Modulatorkolben einwirkende Feder 32e abstützt. Dadurch hängt der Druck, bei dem das Ventil 32a schließt, von der Höhe des Steuerdrucks in der Kammer 32d ab. Bei geringem Steuerdruck bleibt die Wirkung wie in den Fig. 1 und 2 erhalten (Druckbegrenzung), da die Feder 30a entsprechend stark ausgebildet ist.

Bei höheren Drücken dagegen wandert der Kolben 30 nach rechts aus und die Feder 32b verliert an Wirksamkeit. Jetzt hat die Bremsdrucksteuereinrichtung 32 die Wirkung eines Folgesteuerventils. Dies ist besonders wichtig, wenn die Vorderachse über einen Sensor am Differential geregelt wird. Dieser Sensor bewirkt dann bis zu einer bestimmten Druckdifferenz, wie sie bei einem Sprung des Kraftschlußbeiwerts auftritt, daß beide Räder am Blockieren gehindert werden. Hier ist keine Umschaltung zwischen select low und select high erforderlich, da ja bei asymmetrischer Fahrbahn und Select-low-Betrieb die Regelung bei geringen Drücken beginnt und das gesteuerte Rad den entsprechenden Differenzdruck erhält und somit blockiert.

Die Hinterachse wird insgesamt nach diesem Prinzip geregelt.

Zusätzlich ist hier für den offenen Bremskreis I noch eine Rückförderung 31 eingezeichnet sowie ein Bypassventil 33 und Rückschlagventile 34a und b. Dieses Bypassventil ist ein Zweistellungsmagnetventil, das die Ventile 9a und 32a der Bremsdrucksteuereinrichtungen 9' und 32 zeitweise überbrückt, im Regelungsfall geschaltet wird und dann die Ventile 9a und 32a und die Kolben 9b und 32b erst wirksam macht und bei Abschalten der Regelung (und des Ventils 33) im Störfall abgeschaltet wird und dann die Überbrückung bewirkt.

Das Magnetventil 22 der Fig. 2 entsprechende Magnetventil 35 ist und Fig. 3 so ausgebildet, daß es erst bei Ansteuerung durchlässig wird, also zumindest bei Bremsbeginn geschaltet werden muß. Im Störfall der Regelung fällt es dann ab und macht damit das Rad 4' drucklos, was eine gewisse Seitenführung garantiert.

**Patentansprüche**

1. Antiblockierregelsystem für ein Fahrzeug mit diagonaler Bremskreisaufteilung enthaltend einen einem ersten Hinterrad zugeordneten Drehzahlfühler (4a) und wenigstens einen den Vorderrädern zugeordneten Drehzahlfühler (1a), eine Auswerteschaltung (8), die die Signale der Drehzahlfühler (1a, 4a) verarbeitet und Steuersignale für Bremsdrucksteuerventilanordnungen in Abhängigkeit vom ermittelten Radbewegungsverhalten erzeugt, wobei zur Variation des Bremsdrucks bei Blockierneigung an der Bremse des ersten Hinterrads (4) eine von der Auswerteschaltung angesteuerte Magnetventileinrichtung (7) vorgesehen ist, wobei außerdem zur Steuerung des Bremsdrucks bei Blockierneigung am anderen Hinterrad eine Bremsdrucksteuereinrichtung (9) vorgesehen ist, die dort einen dem eingesteuerten Druck am ersten Hinterrad (4) etwa entsprechenden Druck einsteuert (Folgesteuerung), und wobei schließlich bei Blockierneigung der Bremsdruck an dem ersten Hinterrad (4) diagonal gegenüberliegenden (ersten) Vorderrad (1) über eine Magnetventileinrichtung und am andern Vorderrad (2) durch Folgesteuerung eingesteuert wird, dadurch gekennzeichnet, daß zur Bremsdruckvariation bei Blockierneigung am ersten Vorderrad (1) eine gesonderte von der Auswerteschaltung in Abhängigkeit vom Bewegungsverhalten des oder der Vorderräder (1, 2) gesteuerte Magnetventileinrichtung (6) vorgesehen ist, und daß dem anderen Vorderrad (2) eine Bremsdrucksteuereinrichtung (10) zugeordnet ist, die dort bei Blockierneigung ein vom eingesteuerten Druck am ersten Vorderrad (1) um eine vorgegebene Differenz abweichenden Druck einsteuert.

2. Antiblockierregelsystem nach Anspruch 1, dadurch gekennzeichnet, daß der Differenzdruck an dem anderen Vorderrad in Abhängigkeit vom Absolutdruck des am ersten Vorderrad eingesteuerten Drucks variiert (Fig. 3).

3. Antiblockierregelsystem nach Anspruch 1 oder 2, dadurch gekennzeichnet, daß die Magnetventileinrichtungen (6, 7) Dreistellungsventile zum Druckaufbau, Druckabbau und zur Druckkonstanthaltung sind.

4. Antiblockierregelsystem nach Anspruch 1 oder 2, dadurch gekennzeichnet, daß eines der Magnetventileinrichtungen (21) ein Dreistellungsventil zum Druckaufbau, Druckabbau und zur Druckkonstanthaltung ist und die zweite Magnetventileinrichtung (2) ein Zweistellungsventil mit einer Durchlaßstellung und einer Sperrstellung ist und daß das Zweistellungsventil (22) dem Dreistellungsventil (21) nachgeschaltet ist.

5. Antiblockierregelsystem nach Anspruch 4, dadurch gekennzeichnet, daß der Ausgang des Dreistellungsventils (21) mit der Bremse des ersten Vorderrads (1') und der Ausgang des Zweistellungsventils mit der Bremse des ersten Hinterrads (4') verbunden ist.

6. Antiblockierregelsystem nach einem der Ansprüche 1 bis 5, dadurch gekennzeichnet, daß der Magnetventileinrichtung (7) zur Variation des Bremsdrucks am ersten Hinterrad ein gegebenenfalls lastabhängiger Druckminderer (10) nachgeschaltet ist.

7. Antiblockierregelsystem nach einem der Ansprüche 1 bis 6, dadurch gekennzeichnet, daß die dem ersten Hinterrad (4') zugeordnete Magnetventileinrichtung (35) und/oder die Auswerteschaltung derart ausgelegt sind, daß bei Abschaltung des Antiblockierregelsystems im Störfall dem ersten Hinterrad (4') kein Druck zugeführt wird und daß ein Sicherheitsventil (33) die Bremsdrucksteuereinrichtung (9') für das zweite Hinterrad überbrückt.

8. Antiblockierregelsystem nach einem der Ansprüche 1 bis 7, dadurch gekennzeichnet, daß bei frontgetriebenem Fahrzeug der den Vorderrädern zugeordnete Drehzahlgeber (20) am Differential (5') angeordnet ist.

9. Antiblockierregelsystem nach einem der Ansprüche 1 bis 7, dadurch gekennzeichnet, daß der den Vorderrädern (1, 2) zugeordnete Drehzahlgeber am ersten Vorderrad (1) angeordnet ist.

10. Antiblockierregelsystem nach einem der Ansprüche 1 bis 9, dadurch gekennzeichnet, daß beiden Hinterrädern Drehzahlgeber zugeordnet sind.

## Claims

1. Antilock regulating system for a vehicle with diagonal brake circuit arrangement, including a speed sensor (4a) assigned to a first rear wheel and at least one speed sensor (1a) assigned to the front wheels, an evaluation circuit (8), which processes the signals of the speed sensors (1a, 4a) and generates control signals for brake pressure control valve arrangements as a function of the determined wheel movement behaviour, a solenoid valve device (7), triggered by the evaluation circuit, being provided at the brake of the first rear wheel (4) for variation of the brake pressure whenever there is a tendency to lock, there further being provided a brake pressure control device (9) on the other rear wheel, for controlling the brake pressure whenever there is a tendency to lock, which brake pressure control device inputs there a pressure approximately corresponding to the input pressure at the first rear wheel (4) (sequence control), and finally, whenever there is a tendency to lock, the brake pressure at the (first) front wheel (1) diagonally opposite the first rear wheel (4) being input via a solenoid valve device and at the other front wheel (2) by sequence control, characterized in that, for brake pressure variation whenever there is a tendency to lock, a solenoid valve device (6), controlled separately from the evaluation circuit as a function of the movement behaviour of the front wheel or wheels (1, 2), is provided at the first front wheel (1), and in that the other front wheel (2) is assigned a brake pressure control device (10) which, whenever there is a tendency to lock, inputs there a pressure deviating from the pressure input at the first front wheel (1) by a given difference.

2. Antilock regulating system according to Claim 1, characterized in that the differential pressure at the other front wheel is varied as a function of the absolute pressure of the pressure input at the first front wheel (Fig. 3).

3. Antilock regulating system according to Claim 1 or 2, characterized in that the solenoid valve devices (5, 7) are three-position valves for pressure build-up, pressure reduction and for constant-pressure maintenance.

4. Antilock regulating system according to Claim 1 or 2, characterized in that one of the solenoid valve devices (21) is a three-position valve for pressure build-up, pressure reduction and for constant-pressure maintenance, and the second solenoid valve device (2) is a two-position valve with a pass position and a block position and in that the two-position valve (22) is connected downstream of the three-position valve (21).

5. Antilock regulating system according to Claim 4, characterized in that the output of the three-position valve (21) is connected to the brake of the first front wheel (1') and the output of the two-position valve is connected to the brake of the first rear wheel (4').

6. Antilock regulating system according to one of Claims 1 to 5, characterized in that, for variation of the brake pressure at the first rear wheel, a, possibly load-dependent, pressure reducer (10) is connected downstream of the solenoid valve device (7).

7. Antilock regulating system according to one of Claims 1 to 6, characterized in that the solenoid valve device (35) assigned to the first rear wheel (4') and/or the evaluation circuit are designed in such a way that, in the event of disconnection of the antilock regulating system in the case of a fault, no pressure is fed to the first rear wheel (4') and in that a safety valve (33) bridges the brake pressure control device (9') for the second rear wheel.

8. Antilock regulating system according to one of Claims 1 to 7, characterized in that, on a front-wheel driven vehicle, the tachometer-generator (20) assigned to the front wheels is arranged on the differential gear (5').

9. Antilock regulating system according to one of Claims 1 to 7, characterized in that the tachometer-generator assigned to the front wheels (1, 2) is arranged on the first front wheel (1).

10. Antilock regulating system according to one of Claims 1 to 9, characterized in that tachometer-generators are assigned to both rear wheels.

## Revendications

1. Système d'asservissement anti-blocage pour un véhicule comportant une répartition des circuits de freinage en diagonale avec un premier détecteur de vitesse de rotation 4a placé sur la roue arrière et au moins un détecteur de vitesse de rotation 1a placé sur une des roues avant, un transformateur de mesure (8) qui traite les signaux des détecteurs (1a et 4a) et engendre des signaux à destination des dispositifs à soupapes de commande de pression de freinage en fonction du comportement du mouvement de la roue établi, où pour la variation de la pression de freinage lors d'une tendance au blocage est prévu sur les freins de la première roue arrière (4) un dispositif à soupape magnétique commandé par le transformateur de mesure, où, en outre, pour la commande de la pression de freinage lors de la tendance au blocage est prévu sur l'autre roue arrière un dispositif de commande de la pression de freinage (9) qui règle la pression correspondante sur la première roue arrière (commande séquentielle) et où, en fin de compte, lors de la tendance au blocage, la pression de freinage sur la première roue avant (1) s'opposant en diagonale à la première roue arrière (4) est régulée par un dispositif de soupapes magnétiques et sur l'autre roue avant (2) par une commande séquentielle, caractérisé en ce que, pour faire varier la pression de freinage lors d'une tendance au blocage sur la première roue avant (1), il est prévu un dispositif à soupapes magnétiques séparé du transformateur de mesure en fonction du comportement en mouvement de la ou des roues avant (1, 2) et en ce que sur l'autre roue avant (2) est adjoint un système de commande de pression de freinage (10) qui là, lors de la tendance au blocage régule une pression s'écartant d'une différence prédéterminée à partir d'une pression régulée sur la première roue avant (1).

2. Système d'asservissement anti-blocage selon la revendication 1, caractérisé en ce que la pression différentielle sur l'autre roue avant varie en fonction de la pression absolue de la pression régulée sur la première roue avant (figure 3).

3. Système d'asservissement anti-blocage selon la revendication 1 ou 2, caractérisé en ce que les dispositifs à soupapes magnétiques (6, 7) sont des soupapes à trois voies pour la mise en pression, la mise en dépression et pour le maintien de la pression.

4. Système d'asservissement anti-blocage selon la revendication 1 ou 2, caractérisé en ce qu'un des dispositifs à soupapes magnétiques (21) pour la mise en pression, la mise en dépression et le maintien de la pression est une soupape à trois voies et que le second dispositif de soupapes magnétiques (2) est une soupape à deux voies avec une position de passage et une position d'obturation, et en ce que la soupape à deux voies (22) est branchée à la suite de la soupape à trois voies (21).

5. Système d'asservissement anti-blocage selon la revendication 4, caractérisé en ce que la sortie de la soupape à trois voies (21) est relié aux freins de la première roue avant (1') et la sortie de la soupape à deux voies (22) est reliée aux freins de la première roue arrière (4').

6. Système d'asservissement anti-blocage selon l'une des revendications 1 à 5, caractérisé en ce que le dispositif à soupapes magnétiques (7) pour la variation de la pression de freinage sur la première roue arrière est branché à la suite un détendeur (10) dépendant éventuellement de la charge.

7. Système d'asservissement anti-blocage selon l'une des revendications 1 à 6, caractérisé en ce que le dispositif à soupapes magnétiques (35) et/ou le transformateur de mesure associés à la première roue arrière (4') sont conçus de telle sorte que, lors de la déconnexion du système d'asservissement antiblocage en cas de perturbation, aucune pression ne s'exerce sur la première roue arrière (4') et qu'une soupape de sécurité (33) court-circuite le dispositif de commande de pression de freinage (9') pour la seconde roue arrière.

8. Système d'asservissement anti-blocage selon l'une des revendications 1 à 7, caractérisé en ce que, sur un véhicule à traction avant, le compteur de vitesse de rotation (20) associé aux roues avant est placé sur le différentiel (5').

9. Système d'asservissement anti-blocage selon l'une des revendications 1 à 7, caractérisé en ce que le compteur de vitesse de rotation associé aux roues avant (1, 2) placé sur la première roue avant (1).

10. Système d'asservissement anti-blocage selon l'une des revendications 1 à 9, caractérisé en ce que des compteurs de vitesse de rotation sont associés aux deux roues arrière.

FIG.1

FIG.2

FIG.3